(19) Europäisches Patentamt / European Patent Office / Office européen des brevets

(11) **EP 4 707 913 A1**

(12) **DEMANDE DE BREVET EUROPEEN**

(43) Date de publication:
**11.03.2026 Bulletin 2026/11**

(21) Numéro de dépôt: **25199398.6**

(22) Date de dépôt: **01.09.2025**

(51) Classification Internationale des Brevets (IPC):
**G02F 1/21** *(2006.01)*     **G02F 1/29** *(2006.01)*
**G02F 1/295** *(2006.01)*     **G02F 1/365** *(2006.01)*

(52) Classification Coopérative des Brevets (CPC):
**G02F 1/292; G02F 1/212; G02F 1/2955; G02F 1/365**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **06.09.2024 FR 2409462**

(71) Demandeur: **Commissariat à l'Energie Atomique et aux Energies Alternatives 75015 Paris (FR)**

(72) Inventeurs:
• **GUERBER, Sylvain 38054 Grenoble Cedex 09 (FR)**
• **FOWLER, Daivid 38054 Grenoble Cedex 09 (FR)**

(74) Mandataire: **Atout PI Laplace Immeuble Up On 25 Boulevard Romain Rolland CS 40072 75685 Paris Cedex 14 (FR)**

(54) **STRUCTURE MICROMÉCANIQUE POUR CAPTEUR OPTIQUE**

(57) Structure micromécanique pour capteur optique, comprenant une micropoutre (100) en flexion autour d'une première direction, un actionneur (230) commandé pour modifier l'orientation de la micropoutre (100) autour de ladite direction (x) et à une extrémité libre de ladite micropoutre (100), des antennes (223) de réseau optique phasé (120) disposées pour émettre un faisceau lumineux orientable autour d'une deuxième direction (y) transversale à la première direction. La structure micromécanique comprend de plus un capteur embarqué dans la micropoutre transmettant un signal représentatif de ladite orientation courante de la micropoutre autour de la première direction.

Fig. 6

190

EP 4 707 913 A1

**Description**

**Domaine technique et arrière-plan**

L'invention concerne le domaine de l'optique intégrée, avec des applications dans le domaine des systèmes LiDARs (Light Detection and Ranging, ou détection et télémétrie par la lumière). Elle utilise la technologie des circuits de type réseaux optiques phasés ou OPA (Optical Phased Arrays), éventuellement sur puce. Elle s'envisage par exemple pour le domaine de l'automobile - un LIDAR dans un véhicule permettant en effet de détecter un piéton ou un autre obstacle. La réalisation de LiDARs à base d'équipements intégrés de photonique est de nature à diminuer fortement le cout des capteurs tout en améliorant les performances.

Le fonctionnement d'un réseau optique phasé OPA est fondé sur un diviseur de puissance qui répartit le faisceau émis par une source lumineuse cohérente, typiquement un laser, entre une série d'antennes optiques dont les extrémités émettrices sont placées sur une droite ou rangée (on parle donc d'OPA 1D) et qui émettent chacune une fraction de la puissance optique de la source. Ces antennes sont espacées les unes des autres sur la droite par une distance souvent constante de l'ordre de la longueur d'onde du signal émis, typiquement quelques $\mu$m ou moins. Le système comprend également des modulateurs de phase, à raison en général d'un par antenne, qui permettent de contrôler les différences de phase entre les signaux optiques émis d'une antenne à l'autre. Un gradient de phase linéaire est appliqué entre les signaux émis par chaque antenne le long de la droite, et une interférence est produite. Celle-ci prend la forme d'un faisceau dirigé dans une direction donnée. En modifiant la pente du gradient de phase linéaire, il est possible de modifier la direction d'émission vers la gauche ou la droite de la série d'antennes et donc d'effectuer un balayage, ou scan.

Ce type de circuit permet donc de diriger un faisceau optique dans une direction choisie sans aucune pièce mécanique mobile. Cette technique est nommée « solid state beam steering » ou direction de faisceau solide ou par semi-conducteurs. Elle est abordée dans l'article Doylend et al. Two-dimensional free-space beam steering with an optical phased array on silicon-on-insulator, Opt. Express, 2011, vol. 19, no. 22, p. 21595. Néanmoins, sans une autre stratégie d'orientation du faisceau, l'orientation et donc le balayage - ou scan - se fait selon une seule direction (notée $\varphi$).

Une méthode pour diriger le faisceau autour d'une deuxième direction consiste à modifier la longueur d'onde de la source et à profiter du fait que les antennes optiques sont des réseaux de diffraction, ce qui implique que leur angle d'émission $\theta$ dépend de la longueur d'onde de la lumière.

Cette méthode permet donc de réaliser un balayage 2D ($\varphi$ x $\theta$) du faisceau en utilisant un réseau optique phasé OPA 1D. Cependant, pour obtenir un angle de balayage important en $\theta$ (typiquement plus de 10°), il est nécessaire de modifier significativement la longueur d'onde du laser (souvent de plus de 100 nm car une sensibilité typique est $\Delta\theta$~0.1° pour $\Delta\lambda$~1nm). Or cela est contraignant, les sources laser les plus disponibles n'offrant pas une telle variabilité de la longueur d'onde, en combinaison avec les autres performances demandées par un système LIDAR telles que notamment une forte puissance, une faible largeur de raie, et une possibilité de modulation en fréquence.

La réalisation de réseaux optiques phasés OPAs 2D contenant une matrice d'émetteurs a également été proposée, notamment par l'article Sun et al, Large-scale nanophotonic phased array, Nature, vol. 493, no. 7431, 2013. Un tel réseau permet, en contrôlant individuellement la phase de chaque émetteur, de diriger le faisceau émis selon deux directions complémentaires ($\varphi$ x $\theta$).

Cependant, la réalisation d'une matrice d'émetteurs optique implique de fortes contraintes sur le circuit et en conséquence une telle architecture mène à des systèmes peu performants, soit parce que la puissance émise est faible, soit parce que l'amplitude de balayage est limitée.

On connait aussi de FR3098606A1, FR3112216A1, FR3112217A1, FR3112218A1 et de l'article Guerber S. et al. Active optical phased array integrated within a micro-cantilever, Communications Engineering volume 3, 76, 2024, une réalisation fondée sur la technologie MEMS -Microsystèmes ElectroMécaniqueS - combinée avec une approche de photonique intégrée.

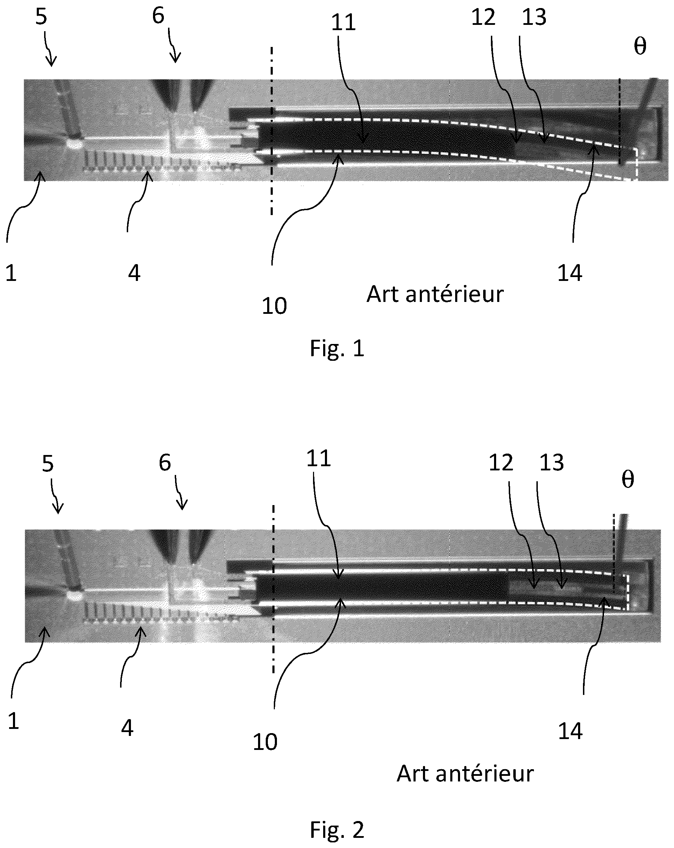

Tel qu'illustré en Figures 1 et 2 qui sont des images au microscope, on s'intéresse à un support 1 en silicium (un wafer) portant une série ordonnée de bornes de commande 4, par exemple au nombre de 8, une entrée optique 5 de type fibre optique pour la lumière d'un laser et des bornes électriques 6 pour appliquer une tension à un actionneur piézoélectrique.

On a détouré dans le support 1 une micropoutre 10, constituant un objet en technologie MEMS, équipée sur sa surface supérieure d'un actionneur piézoélectrique 11 - PZT - relié aux bornes électriques 6. La micropoutre comporte ainsi un élément actif qui permet de l'incliner de manière contrôlable, en l'occurrence un élément piézoélectrique PZT de type titano-zirconate de plomb. Celui-ci est activé à la demande par application d'une tension entre les deux bornes électriques 6.

La micropoutre 10 est équipée aussi sur sa surface supérieure d'un réseau optique phasé OPA. Le réseau optique phasé est constitué d'un séparateur 12 relié à l'entrée optique 5, séparant la lumière en différentes voies, par exemple au nombre annoncé de 8 voies dans des guides d'onde, de modulateurs de phase 13 - un pour chaque guide d'onde issu du séparateur 12 - et des antennes 14 constituant les extrémités des guides d'onde émettant en espace libre les ondes de phase modulées par les modulateurs de phase 13. Les modulateurs de phase 13 sont commandés individuellement par l'intermédiaire des bornes de commande 4.

Ainsi, le système présenté comprend un OPA 1D sur un objet MEMS de type micropoutre, pouvant comme cela est connu potentiellement entrer en résonance mécanique et donc balayer des amplitudes angulaires significatives. Les directions de balayage de l'OPA et de la micropoutre sont orthogonales, de manière à permettre un balayage 2D.

[Fig. 1] Quand aucune tension n'est appliquée aux bornes de l'élément piézoélectrique 11, la micropoutre 10 pend légèrement, du fait de son poids, la flexion étant limitée par la rigidité du matériau. L'angle $\theta$ prend une première valeur, comme cela est visible sur la figure 1.

[Fig. 2] Si on applique une tension de quelques volts à l'élément piézoélectrique 11, par les bornes électriques 6, et comme cela est visible sur la figure 2, on redresse la micropoutre, ce qui a pour effet de modifier l'angle d'émission du faisceau $\theta$. En combinant ce système avec un réseau optique phasé OPA capable de scanner dans la direction $\varphi$ perpendiculaire à $\theta$, il est possible de faire balayer le faisceau émis en deux dimensions sans modification de la longueur d'onde du faisceau.

De plus, en appliquant à la micropoutre par l'actionneur PZT un signal sinusoïdal choisi, il est possible d'obtenir une grande variation d'angle $\theta$, de l'ordre de plusieurs dizaines de degrés, du fait d'un phénomène de résonance de la micropoutre.

Cependant, pour permettre un déploiement large de ce dispositif dans des applications grand public comme l'automobile, il est souhaité pouvoir suivre en temps réel la position de la micropoutre, qui est représentative d'un des angles d'émission du LiDAR. Un tel suivi offre une garantie de bon fonctionnement du système et de sécurité vis-à-vis des personnes - une immobilisation non voulue et non détectée de la micropoutre amènerait en effet une concentration de puissance dangereuse pour les yeux notamment, et doit donc, si elle se produit, être détectée pour par exemple couper l'émission laser.

L'intégration d'un dispositif de suivi en temps réel de la position de la micropoutre est donc l'objet de cette invention.

L'intégration de jauges de contrainte sur des micropoutres MEMS a été abordée dans le cadre du développement de jauges piezorésistives, par exemple dans le document Behrens et al, Piezoresistive cantilever as portable micro force calibration standard J. Micromechanics Microengineering, vol. 13, no. 4, pp. S171-S177, 2003. Un tel système composé d'une micropoutre et d'une jauge de contrainte est utilisé pour réaliser des capteurs de pression, de vitesse d'écoulement des gaz, ou encore, pour mesurer la déflexion de la pointe d'un microscope à force atomique, dans le document Dukic et al, Piezoresistive AFM cantilevers surpassing standard optical beam deflection in low noise topography imaging Sci. Rep., vol. 5, no. 1, p. 16393, 2015. Ces systèmes n'incorporent pas de réseau optique phasé.

**Présentation de l'invention**

Pour surmonter les difficultés et insuffisances rencontrées avec l'art antérieur, il est donc proposé une structure micromécanique pour capteur optique, comprenant une micropoutre en flexion autour d'une première direction, un actionneur commandé pour modifier l'orientation de la micropoutre autour de ladite première direction et, à une extrémité libre de ladite micropoutre, des antennes de réseau optique phasé disposées pour émettre un faisceau lumineux orientable autour d'une deuxième direction transversale à la première direction.

La structure micromécanique est remarquable car elle comprend de plus un capteur embarqué dans la micropoutre transmettant un signal représentatif d'une orientation courante de la micropoutre autour de la première direction.

Le signal peut être utilisé par un moyen de modulation en fonction dudit signal d'une commande transmise à l'actionneur ou d'une commande transmise à la source de lumière. On peut alors corriger un comportement du système pour éviter une accumulation, dans une direction donnée, d'une trop grande puissance lumineuse.

Selon des caractéristiques optionnelles et avantageuses :

- la structure microélectronique peut comprendre un moyen de lecture optique pour mesurer le signal transmis par le capteur.
- le capteur embarqué comprend un guide d'onde comprenant un matériau d'indice de réfraction dépendant d'une contrainte mécanique dudit matériau variant avec l'orientation de la micropoutre autour de ladite première direction.
- la structure micromécanique peut comprendre un interféromètre de Mach-Zender ledit capteur embarqué comprenant un bras capteur dudit interféromètre de Mach-Zender.
- la structure microélectronique peut comprendre un séparateur de lumière pour transmettre de la lumière issue d'une même source aux antennes de réseau optique phasé et au capteur embarqué, qui est alors un capteur optique.
- la structure microélectronique peut comprendre un modulateur de phase commandé pour adapter une phase d'une onde, par exemple une lumière, transmise audit capteur embarqué, et plus précisément pour modifier une amplitude d'un signal interférentiel exploité par ledit capteur embarqué.

- le capteur embarqué peut comprendre un guide d'ondes faisant au moins un aller et un retour le long de la micropoutre.
- le capteur embarqué peut comprendre un capteur piézoélectrique.

L'invention concerne aussi un dispositif de détection et télémétrie par la lumière comprenant une structure micromécanique pour capteur optique selon les principes évoqués, et une source de lumière cohérente pour émettre par les antennes de réseau optique phasé et un contrôleur pour commander l'actionneur et le réseau optique phasé pour orienter suivant deux dimensions un faisceau lumineux émis pour détection et télémétrie.

L'invention porte aussi sur un véhicule automobile comprenant un tel dispositif de détection et télémétrie par la lumière pour détecter des obstacles au déplacement du véhicule.

## Liste des figures

La figure 1 présente, comme déjà mentionné, une image au microscope d'une micropoutre MEMS équipée d'un actionneur PZT et d'un réseau optique phasé OPA, au repos, selon l'art antérieur.

La figure 2 présente, toujours comme déjà mentionné, une image similaire du même objet, mais l'actionneur étant activé, toujours selon l'art antérieur.

La figure 3 présente un mode de réalisation de l'invention.

La figure 4 présente un moyen technique utilisé dans un mode de réalisation de l'invention.

La figure 5 présente un principe physique utilisé dans un mode de réalisation.

La figure 6 présente un deuxième mode de réalisation de l'invention.

La figure 7 présente une vue du dessus du système de la figure 6.

La figure 8 présente l'exploitation des mesures obtenues avec le système de la figure 6.

La figure 9 présente une variante du système de la figure 6.

La figure 10 présente une autre variante du système de la figure 6.

## Description en lien avec les figures

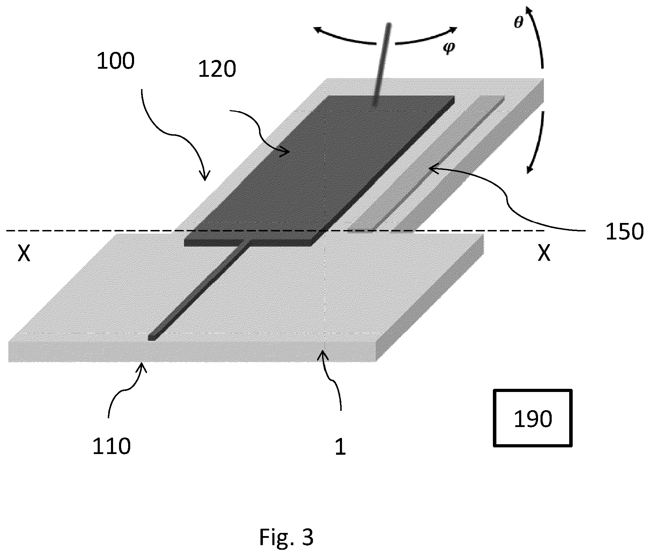

[Fig. 3] En figure 3, un LiDAR construit à l'aide d'un support 1 plan comprend une micropoutre 100 détourée dans le support 1, qu'on a équipée d'un actionneur piézoélectrique (non représenté) pour la flexion atour d'une direction X parallèle au plan du support 1 et perpendiculaire à la direction de la micropoutre. Ainsi, la flexion permet une orientation de l'extrémité libre de la micropoutre selon un angle θ.

La micropoutre est équipée d'une entrée optique 110 et d'un réseau optique phasé OPA 120 implanté sur la micropoutre, ce qui permet de réaliser un balayage selon un angle φ, qui conjugué au balayage précédent forme un balayage en deux dimensions (φ x θ).

Les principes présentés en relation avec les figures 1 et 2 sont repris, éventuellement aménagés, dans cette réalisation.

L'intégration d'un capteur de position permet le suivi en temps réel de la direction du faisceau émis selon l'angle θ.

Dans le LIDAR comprenant la micropoutre 100 et sur celle-ci le réseau optique phasé 120, on intègre sur la micropoutre 100 un capteur de position 150, par exemple une jauge piézoélectrique, ou par exemple une jauge optique, et ce capteur permet de suivre en direct la position de la micropoutre 100 selon l'angle θ, et donc la direction du faisceau émis par le LiDAR selon θ.

Un contrôleur 190 prend en compte cette information de position, et l'utilise pour une modulation d'une commande transmise à l'actionneur piézoélectrique ou d'une commande transmise à la source de lumière appliquée à l'entrée optique 110, ce qui apporte des garanties en termes de sécurité et de fiabilité.

Le suivi de la position du faisceau selon φ est assuré par ailleurs au sein du circuit photonique.

Un autre mode de réalisation va être présenté. Il utilise une jauge optique, fabriquée à l'aide d'un interféromètre de Mach-Zenhder MZI.

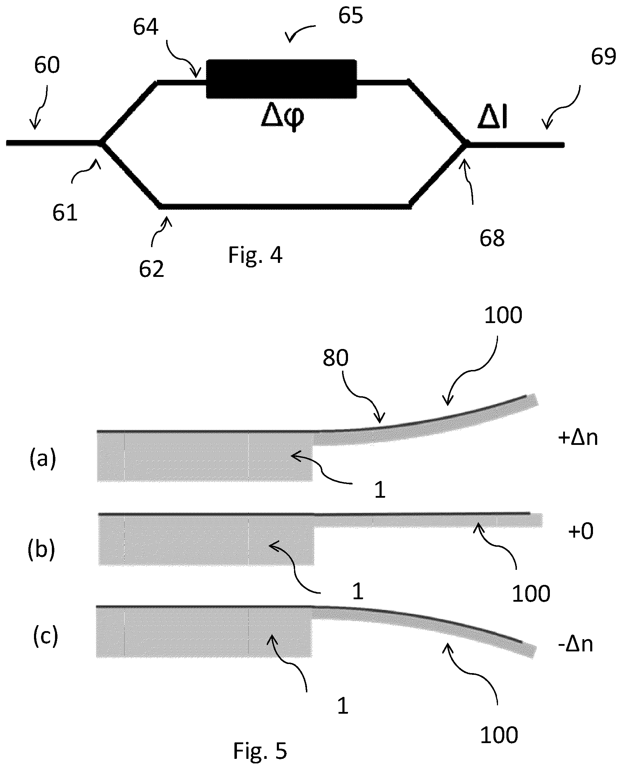

[Fig. 4] En figure 4, on rappelle le principe de l'interféromètre de Mach-Zenhder MZI. Un interféromètre de Mach-Zenhder utilise, sur un guide d'onde alimenté par une entrée optique 60, un séparateur 61 qui répartit la lumière injectée vers deux bras indépendants : le bras de référence 62 et le bras capteur 64, incluant un parcours spécifique 65. Les faisceaux de lumière ayant cheminés dans les deux bras sont ensuite mélangés via un combineur 68 pour produire un faisceau de sortie unique qui est exploité à la sortie optique 69. Dans le cas d'une lumière cohérente, la transmission de l'interféromètre MZI dépend de la différence de phase entre les deux bras. Ainsi, la transmittance d'un interféromètre MZI a une évolution sinusoïdale en fonction de la longueur d'onde de la lumière appliquée en entrée avec des maxima qui correspondent à une interférence constructive (signaux des deux bras en phase) et des minima à une interférence destructive (signaux des deux bras en antiphase). Un interféromètre de Mach-Zenhder MZI permet donc de traduire une variation de phase $\Delta\varphi$ en une variation d'intensité $\Delta I$ qui est plus simple à détecter.

[Fig. 5] Tel qu'illustré Figure 5, les indices de réfraction de certains matériaux solides, et c'est le cas du silicium, dépendent de la contrainte à laquelle le matériau est soumis, du fait d'un effet dit photoélastique. Ainsi, la phase de la lumière se propageant dans un guide d'onde qui subit une contrainte est modifiée. L'effet photoélastique est de l'ordre de $\Delta n = 10^{-6}$ pour une contrainte de 40 MPa qui peut être appliquée avec un actionneur PZT comme présenté dans l'article Tang et al, Hybrid integrated ultralow-linewidth and fast-chirped laser for FMCW LiDAR, Opt. Express, vol. 30, no. 17, p. 30420, 2022.

Ainsi sur la figure, on a représenté, vu de côté, le support 1 et la micropoutre 100 portant un guide d'onde 80 en silicium sur sa face supérieur avec une flexion vers le haut (a) ce qui apporte au silicium du guide d'onde 80 une compression d'où la modification d'indice de réfraction $+ \Delta n$, sans flexion (b), et avec une flexion vers le bas (c) équivalente à la flexion présentée vers le haut en (a), ce qui apporte au silicium du guide d'onde 80 un étirement d'où la modification d'indice de réfraction $- \Delta n$.

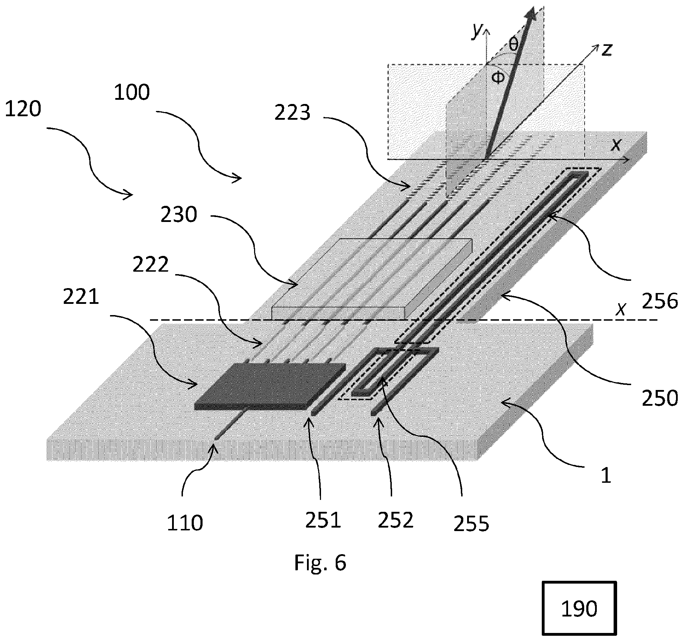

[Fig. 6] Il est proposé d'utiliser le principe de l'interféromètre de Mach-Zenhder MZI pour réaliser un capteur ou jauge optique de position, l'un des bras de l'interféromètre MZI servant de zone exposée aux déformations, variables dans le temps, l'autre de référence fixe et par exemple non contrainte.

La figure 6 montre à nouveau un support 1, une micropoutre 100 de direction z, en flexion autour de la direction X, une entrée optique 110 sur le support 1 à proximité de la micropoutre et un réseau optique phasé 120 placé entre l'entrée optique 110 et l'extrémité libre de la micropoutre. Celui-ci comprend un séparateur de lumière 221 séparant la lumière issue de l'entrée optique 110 en N faisceaux menés par des guides d'onde parallèles disposés côte à côte sur le support 1 puis sur la micropoutre 100, des modulateurs de phase 222, à raison d'un modulateur pour chacun des guides d'onde (la commande des modulateurs n'est pas représentée) et des antennes 223 placées à l'extrémité de la micropoutre 100 pour émettre la lumière guidée par les différents guides d'onde parallèles, les parties actives des antennes 223 formant une rangée rectiligne sur la partie distale de la micropoutre 100. La modulation des phases permet d'orienter le faisceau lumineux selon l'angle $\varphi$ autour de la direction y (dans le plan xy).

Les principes présentés en relation avec les figures 1 et 2 sont à nouveau repris, éventuellement aménagés, dans cette réalisation.

On réalise de plus un interféromètre MZI 250 comprenant une entrée optique 251 et une sortie optique 252 sur le support 1, dont le bras référence 255 hors de la micropoutre est également sur le support 1, et dont le bras capteur 256 est placé, en tout ou partie sur la micropoutre 100. Pour cela, le bras capteur 256 est par exemple composé essentiellement de deux segments rectilignes parallèles l'un à l'autre et d'un coude formant demi-tour reliant les deux segments. Les deux segments sont placés parallèles aux guides d'onde, sur une longueur significative de la micropoutre, le coude étant de manière optimale au droit des antennes 223, de telle sorte que les deux segments du bras capteur 256 parcourent toute la longueur de la micropoutre.

La micropoutre 100 est équipée d'un actionneur piézoélectrique 230, commandé par une tension qui lui est appliquée (les bornes ne sont pas visibles sur la figure), ce qui provoque des variations de flexion de la micropoutre et donc permet d'orienter le faisceau lumineux autour de la direction x (dans le plan yz), selon l'angle $\theta$.

Lors de l'actionnement de la micropoutre 100 par l'actionneur 230, une contrainte se crée au sein du bras capteur 256, et cette contrainte crée une différence d'indice de réfraction du guide d'onde sur une longueur d'autant plus importante que le bras capteur 256 est installé sur toute la longueur de la micropoutre 100, jusqu'à l'approche de son extrémité libre. Le bras référence 255 ne subit par contre aucune contrainte. La mesure de l'intensité lumineuse à la sortie du MZI permet alors de déterminer la position courante de la micropoutre 100 selon le principe expliqué en lien avec la figure 4. La sortie optique 252 lit cette intensité avec par exemple une photodiode.

A nouveau un contrôleur 190 prend en compte l'information de position, et l'utilise pour une modulation d'une commande transmise à l'actionneur piézoélectrique ou d'une commande transmise à la source de lumière appliquée à l'entrée optique 110, ce qui apporte des garanties en termes de sécurité et de fiabilité.

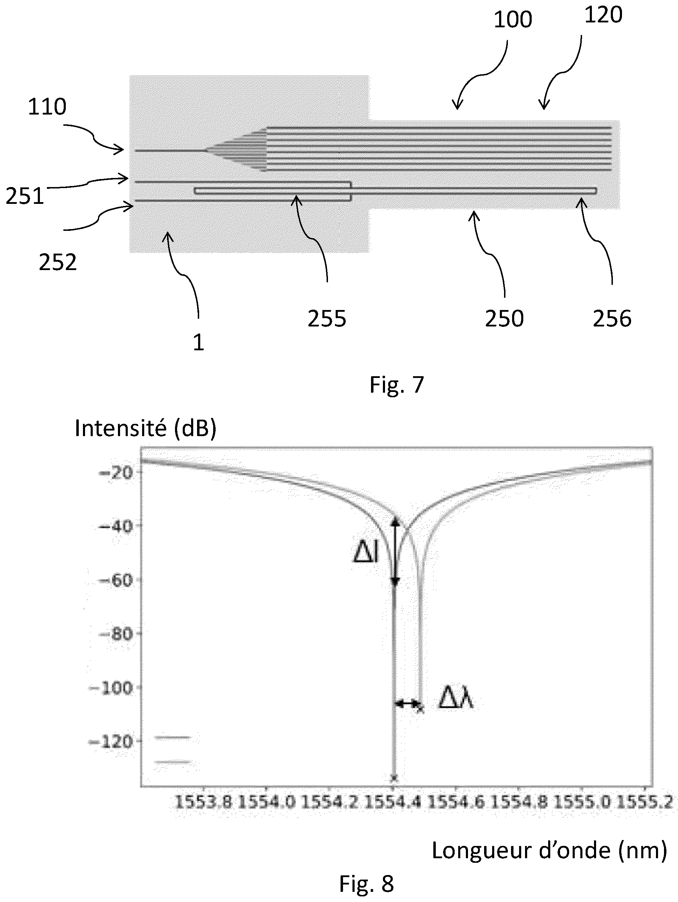

[Fig. 7] Une vue du dessus du système de la figure 6 est présenté Figure 7, avec intégration du capteur de position sur une micropoutre sur laquelle a été placé préalablement ou parallèlement un circuit photonique de type réseau optique phasé OPA comprenant un séparateur, des modulateurs et des antennes. A nouveau La micropoutre dispose d'un actionneur, qui est dans le mode de réalisation un actionneur PZT. Le capteur de position optique est placé avec l'un des bras de l'interféromètre MZI sur la micropoutre - il s'agit du bras capteur - et le second hors de la micropoutre - il s'agit du bras de référence. Le bras de référence peut aussi être constitué par deux segments parallèles l'un à l'autre et reliés l'un à l'autre par un coude formant demi-tour. Il est proposé que la longueur du bras capteur soit plus importante que la longueur du bras de référence.

On considère un interféromètre MZI avec les caractéristiques suivantes :

- longueur du bras de référence $L_{ref}$ = 8 mm, différence de longueur entre les deux bras $\Delta L$ = 50 $\mu$m, d'où la relation $L_{capt} = L_{ref} + \Delta L$

- indices de réfraction au repos dans les guides d'onde du bras de référence et du bras de capteur égaux $n_{ref} = n_{capt} = 3$. Le bras capteur subit de plus une modification (addition ou soustraction) maximale de l'indice de réfraction $\Delta n$.

On introduit de plus les vecteurs d'onde dans le bras capteur et dans le bras de référence :

$$\beta_{ref} = \frac{2\pi n_{ref}}{\lambda} \quad \text{et} \quad \beta_{capt} = \frac{2\pi(n_{capt} + \Delta n)}{\lambda}.$$

Une simulation analytique peut être réalisée en utilisant l'équation décrivant l'intensité en sortie d'un interféromètre MZI :

$$I_0 = \frac{1}{2}\left[1 + \cos(\beta_{ref}L_{ref} - \beta_{capt}L_{capt})\right]$$

L'intensité lumineuse à la sortie du MZI $I_0$ est donc fonction de la longueur d'onde.

[Fig. 8] Comme on peut le voir en figure 8, le pic d'interférences destructrices en sortie de l'interféromètre MZI se décale en longueur d'onde d'une valeur $\Delta\lambda$ quand une contrainte est appliquée par l'actionneur PZT (actionneur PZT actif $\Delta n = 10^{-6}$) par rapport à l'état sans contrainte (actionneur PZT inactif $\Delta n = 0$). En ajustant la longueur d'onde du laser à proximité d'une valeur de pic d'interférences de l'interféromètre MZI, il est donc possible d'obtenir une variation d'intensité $\Delta I_0$ sensible, dépendant de la position de la micropoutre et permettant donc de connaître celle-ci.

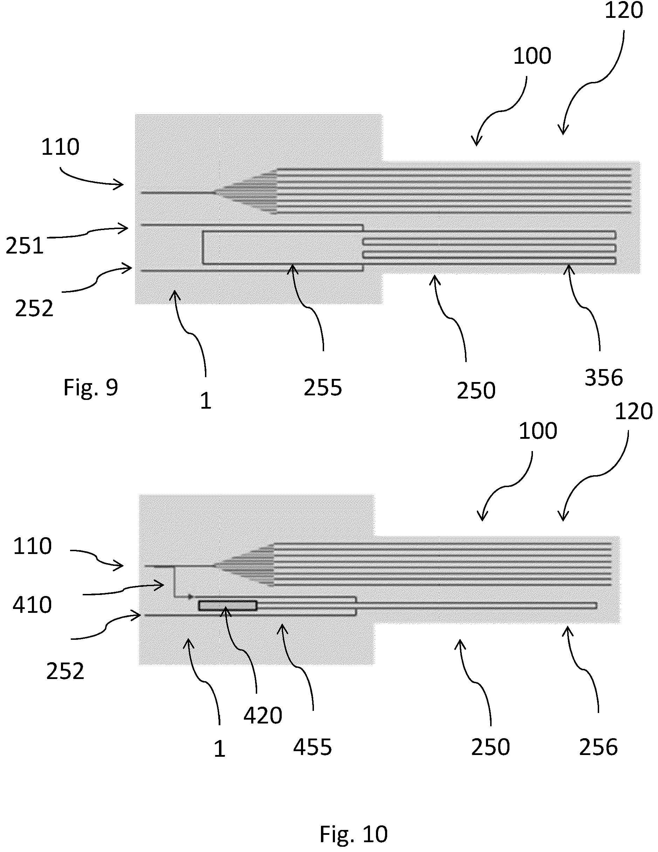

[Fig. 9] Une variante est présentée en référence à la figure 9.

La figure 9 montre à nouveau un support 1, une micropoutre 100 en flexion, une entrée optique 110 sur le support 1 à proximité de la micropoutre et un réseau optique phasé 120 placé entre l'entrée optique 110 et l'extrémité libre de la micropoutre.

On réalise de plus un interféromètre MZI 250 comprenant une entrée optique 251 et une sortie optique 252 sur le support 1, dont le bras référence 255 hors de la micropoutre est également sur le support 1, et dont le bras capteur 356 est placé, en tout ou partie sur la micropoutre 100. Le bras capteur 356 est composé de plusieurs segments en série formant plusieurs allers-retours sur la micropoutre afin d'augmenter la longueur du bras capteur et donc la sensibilité de la jauge. Réaliser ainsi plusieurs passes permet d'accumuler un retard de phase plus important dans le bras capteur vis-à-vis du bras de référence. Cette solution qui augmente la sensibilité impose une surface de guide d'onde formant le bras capteur supérieur, ce qui a été accommodé en augmentant la largeur de la micropoutre par rapport au mode de réalisation de la figure 7.

[Fig. 10] Une variante présentée en figure 10 intègre un modulateur de phase sur le bras de référence, ce qui permet de modifier la longueur d'onde des pics d'interférences de l'interféromètre.

La figure 10 montre à nouveau un support 1, une micropoutre 100 en flexion, une entrée optique 110 sur le support 1 à proximité de la micropoutre et un réseau optique phasé 120 placé entre l'entrée optique 110 et l'extrémité libre de la micropoutre. On réalise de plus un interféromètre MZI 250 comprenant une sortie optique 252 sur le support 1 et dont le bras capteur 256 est placé, en tout ou partie sur la micropoutre 100.

Mais le bras référence 455, qui est placé comme précédemment sur le support 1 hors de la zone de contraintes, comprend un modulateur de phase 420 à commande électrique, qui permet, en recherchant le maximum d'interférence de l'interféromètre de Mach-Zehnder, d'augmenter l'amplitude du signal sans avoir à modifier la longueur d'onde du laser, et donc d'augmenter facilement la sensibilité du dispositif.

De plus, la variante utilise un prélèvement de la source laser 110 utilisée pour le réseau optique phasé OPA pour alimenter l'interféromètre MZI, par l'application d'un séparateur optique 410 à deux voies. L'entrée optique de l'interféromètre est donc couplée à la deuxième voie du séparateur optique 410, le réseau optique phasé 120 étant couplé à la première voie de ce séparateur optique 410. Cela évite d'avoir à utiliser un laser spécifique pour l'interféromètre MZI, alors qu'un laser est utilisé pour le réseau optique phasé OPA.

La structure micromécanique pour capteur optique présentée est utilisée pour balayage - ou scan - d'une scène ou d'un environnement, par un objet fixe ou mobile, et typiquement dans le cadre d'un LIDAR, par exemple mis en œuvre dans une automobile aux fins de prévenir des collisions avec des piétons ou des véhicules.

**Revendications**

1. Structure micromécanique pour capteur optique, comprenant une micropoutre (100) en flexion autour d'une première direction (x), un actionneur (230) commandé pour modifier l'orientation de la micropoutre (100) autour de ladite première direction (x) et à une extrémité libre de ladite micropoutre (100), des antennes (223) de réseau optique phasé (120) disposées pour émettre un faisceau lumineux orientable autour d'une deuxième direction (y) transversale à la première direction (x), **caractérisée en ce que** la structure micromécanique comprend de plus un capteur embarqué (150) dans la micropoutre transmettant un signal représentatif d'une orientation courante de la micropoutre autour de la première direction (x).

2. Structure micromécanique pour capteur optique selon la revendication 1, **caractérisée en ce que** le capteur embarqué (150) comprend un guide d'onde (256) comprenant un matériau d'indice de réfraction dépendant d'une contrainte mécanique dudit matériau variant avec l'orientation de la micropoutre (100) autour de ladite première direction (x).

3. Structure micromécanique pour capteur optique selon la revendication 1 ou la revendication 2, **caractérisée en ce que** la structure micromécanique comprend un interféromètre de Mach-Zender (250), ledit capteur embarqué (150) comprenant un bras capteur dudit interféromètre de Mach-Zender (250).

4. Structure micromécanique pour capteur optique selon l'une des revendications 1 à 3, **caractérisée en ce que** la structure microélectronique comprend un séparateur de lumière (410) pour transmettre de la lumière issue d'une même source aux antennes (223) de réseau optique phasé et au capteur embarqué (150) qui est un capteur optique.

5. Structure micromécanique pour capteur optique selon l'une des revendications 1 à 4, **caractérisée en ce que** la structure microélectronique comprend un modulateur de phase commandé (420) pour modifier une amplitude d'un signal interférentiel exploité par ledit capteur embarqué (150).

6. Structure micromécanique pour capteur optique selon l'une des revendications 1 à 5, **caractérisée en ce que** le capteur embarqué (150) comprend un guide d'ondes (256 ; 356) faisant au moins un aller et un retour le long de la micropoutre (100).

7. Dispositif de détection et télémétrie par la lumière comprenant une structure micromécanique pour capteur optique selon l'une des revendications 1 à 6, une source de lumière cohérente pour émettre par les antennes de réseau optique phasé (120) et un contrôleur pour commander l'actionneur (230) et le réseau optique phasé (120) pour orienter suivant deux dimensions ($\varphi$, $\theta$) un faisceau lumineux émis pour détection et télémétrie.

8. Véhicule automobile comprenant un dispositif de détection et télémétrie par la lumière selon la revendication 7 pour détecter des obstacles au déplacement du véhicule.

Fig. 1

Art antérieur

Fig. 2

Fig. 3

60
64
65
Δφ
69
61
62
ΔI
68

Fig. 4

100
80

(a)
1
+Δn

(b)
1
+0
100

(c)
1
-Δn
100

Fig. 5

Fig. 6

Fig. 7

Longueur d'onde (nm)

Fig. 8

Fig. 9

Fig. 10

Europäisches
Patentamt

European
Patent Office

Office européen
des brevets

## RAPPORT DE RECHERCHE EUROPEENNE

Numéro de la demande

EP 25 19 9398

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | SAEED SHARIF AZADEH ET AL: "Microcantilever-integrated photonic circuits for broadband laser beam scanning", ARXIV.ORG, CORNELL UNIVERSITY LIBRARY, 201 OLIN LIBRARY CORNELL UNIVERSITY ITHACA, NY 14853, 25 juillet 2022 (2022-07-25), XP091338563, * figures 1a, 1b, 1c, 1d, 1e, 1f, 2a, 2b, 2c, 3c * * page 3 - page 5 * * page 11 - page 12 * ----- | 1-8 | INV. G02F1/21 G02F1/29 G02F1/295 G02F1/365 |
| Y | US 2021/173280 A1 (FOWLER DAIVID [FR] ET AL) 10 juin 2021 (2021-06-10) * figures 1-15 * * alinéa [0041] - alinéa [0053] * ----- | 3,5 | |
| Y | US 2022/003985 A1 (MOLLARD LAURENT [FR] ET AL) 6 janvier 2022 (2022-01-06) * alinéas [0001], [0002], [0003], [0057], [0065], [0066], [0095] - [0099], [0107] - [0110]; revendication 1 * ----- | 1-8 | DOMAINES TECHNIQUES RECHERCHES (IPC) G02F |
| Y | US 7 555 333 B2 (UNIV WASHINGTON [US]) 30 juin 2009 (2009-06-30) * figures 10A, 10B * * revendication 18 * ----- | 1-8 | |
| A | US 11 892 746 B1 (MAZED MOHAMMAD A [US]) 6 février 2024 (2024-02-06) * figures 3d, 5c, 19B * ----- | 1-8 | |
| A | US 2021/011280 A1 (FANGET STEPHANE [FR] ET AL) 14 janvier 2021 (2021-01-14) * alinéa [0072] - alinéa [0076] * * alinéa [0121] - alinéa [0122] * ----- -/-- | 1-8 | |

Le présent rapport a été établi pour toutes les revendications

| Lieu de la recherche | Date d'achèvement de la recherche | Examinateur |
|---|---|---|
| La Haye | 9 janvier 2026 | Votini, Stefano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 25 19 9398

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (IPC) |
| A | QIU HUAQING ET AL: "Energy-efficient integrated silicon optical phased array", FRONTIERS OF OPTOELECTRONICS , vol. 16, no. 1 22 septembre 2023 (2023-09-22), XP093250591, ISSN: 2095-2767, DOI: 10.1007/s12200-023-00076-1 Extrait de l'Internet: URL:https://link.springer.com/article/10.1 007/s12200-023-00076-1/fulltext.html [extrait le 2025-03-05] * pages 1, 5, 6 * * page 20 * * figure 24 * * tableau 2 * ----- | 1,2,4,5, 7,8 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 9 janvier 2026 | Votini, Stefano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 25 19 9398

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-01-2026

| Document brevet cité au rapport de recherche | Date de publication | Membre(s) de la famille de brevet(s) | Date de publication |
|---|---|---|---|
| US 2021173280 A1 | 10-06-2021 | EP  3835838 A1 | 16-06-2021 |
| | | FR  3104273 A1 | 11-06-2021 |
| | | US  2021173280 A1 | 10-06-2021 |
| US 2022003985 A1 | 06-01-2022 | EP  3933485 A1 | 05-01-2022 |
| | | FR  3112218 A1 | 07-01-2022 |
| | | US  2022003985 A1 | 06-01-2022 |
| US 7555333 B2 | 30-06-2009 | AU  2004269796 A1 | 17-03-2005 |
| | | CA  2534477 A1 | 17-03-2005 |
| | | EP  1671176 A2 | 21-06-2006 |
| | | JP  2007503938 A | 01-03-2007 |
| | | US  2004122328 A1 | 24-06-2004 |
| | | US  2009235396 A1 | 17-09-2009 |
| | | WO  2005024496 A2 | 17-03-2005 |
| US 11892746 B1 | 06-02-2024 | AUCUN | |
| US 2021011280 A1 | 14-01-2021 | CN  112198657 A | 08-01-2021 |
| | | EP  3764148 A1 | 13-01-2021 |
| | | FR  3098606 A1 | 15-01-2021 |
| | | US  2021011280 A1 | 14-01-2021 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3098606 A1
- FR 3112216 A1
- FR 3112217 A1
- FR 3112218 A1

**Littérature non-brevet citée dans la description**

- **DOYLEND et al.** Two-dimensional free-space beam steering with an optical phased array on silicon-on-insulator. *Opt. Express*, 2011, vol. 19 (22), 21595
- **SUN et al.** Large-scale nanophotonic phased array. *Nature*, 2013, vol. 493 (7431)
- **GUERBER S. et al.** Active optical phased array integrated within a micro-cantilever. *Communications Engineering*, 2024, vol. 3 (76)
- **BEHRENS et al.** Piezoresistive cantilever as portable micro force calibration standard J.. *Micromechanics Microengineering*, 2003, vol. 13 (4), S171-S177
- **DUKIC et al.** Piezoresistive AFM cantilevers surpassing standard optical beam deflection in low noise topography imaging. *Sci. Rep.*, 2015, vol. 5 (1), 16393
- **TANG et al.** Hybrid integrated ultralow-linewidth and fast-chirped laser for FMCW LiDAR. *Opt. Express*, 2022, vol. 30 (17), 30420